# EUROPÄISCHE PATENTSCHRIFT

(11) **EP 2 665 758 B1**
(45) Veröffentlichungstag und Bekanntmachung des Hinweises auf die Patenterteilung: **06.12.2017**
(21) Anmeldenummer: 12700023.0
(22) Anmeldetag: 04.01.2012
(51) Int. Cl.: C08G 18/08, C08G 18/18, C08G 18/28, C08G 18/62, C08G 18/79, C08G 18/80, C09D 175/04, C08G 18/77

(54) **WÄSSRIGES POLYURETHANBESCHICHTUNGSMITTEL UND DARAUS HERGESTELLTE BESCHICHTUNGEN MIT HOHER KRATZBESTÄNDIGKEIT UND GUTER CHEMIKALIENBESTÄNDIGKEIT**
AQUEOUS POLYURETHANE COATING MATERIAL AND COATINGS PRODUCED THEREFROM AND HAVING HIGH SCRATCH RESISTANCE AND GOOD CHEMICALS RESISTANCE
AGENTS DE REVÊTEMENT POLYURÉTHANE AQUEUX ET REVÊTEMENTS PRODUITS À PARTIR DESDITS AGENTS DE REVÊTEMENT POLYURÉTHANE AQUEUX POSSÉDANT UNE RÉSISTANCE AUX RAYURES ÉLEVÉE ET UNE BONNE RÉSISTANCE AUX PRODUITS CHIMIQUES

(30) Priorität: 20.01.2011 US 201161434485 P; 20.01.2011 EP 11151559
(43) Veröffentlichungstag der Anmeldung: 27.11.2013
(73) Patentinhaber: BASF Coatings GmbH, 48165 Münster (DE)
(72) Erfinder: GROENEWOLT, Matthijs, 48147 Münster (DE); NIEMEIER, Manuela, 48317 Drensteinfurt (DE); STÜBBE, Wilfried, 48268 Greven (DE); STEFFENS, Alexandra, 48161 Münster (DE); SCHNIEDERS, Britta, 49716 Meppen (DE)
(74) Vertreter: BASF IP Association
(86) Internationale Anmeldenummer: PCT/EP2012/050096
(87) Internationale Veröffentlichungsnummer: WO 2012/098014

(56) Entgegenhaltungen:
- EP-A1- 0 949 284
- WO-A1-2008/074489
- DE-A1-102007 061 854

## Beschreibung

Die vorliegende Erfindung betrifft wässrige, thermisch härtbare Polyurethanbeschichtungsmittel, enthaltend mindestens eine hydroxylgruppenhaltige Verbindung (A), mindestens eine Verbindung (B) mit freien und/oder blockierten Isocyanatgruppen sowie mit hydrolysierbaren Silangruppen und mindestens einen Katalysator (C) für die Vernetzung von Silangruppen, die eine gute Lagerbeständigkeit aufweisen und die zu Beschichtungen mit einer hohen Kratzfestigkeit bei gleichzeitig guter Chemikalienbeständigkeit führen.

Die EP-A-1 273 640 beschreibt nichtwässrige 2K-Beschichtungsmittel, bestehend aus einer Polyol-Komponente und einer Vernetzerkomponente, bestehend aus aliphatischen und/oder cycloaliphatischen Polyisocyanaten, wobei 0,1 bis 95 mol-% der ursprünglich vorhandenen freien Isocyanatgruppen mit Bisalkoxylsilylamin umgesetzt sind. Diese Beschichtungsmittel können für die OEM-Serienlackierung eingesetzt werden und weisen nach ihrer vollständigen Härtung eine gute Kratzbeständigkeit bei gleichzeitig guter Beständigkeit gegen Umwelteinflüsse auf.

Aus der WO 08/74491, WO 08/74490 und der WO 08/74489 sind 2K-Beschichtungsmittel bekannt, enthaltend Polyole (A), bevorzugt hydroxylgruppenhaltige Polyacrylat- und/oder hydroxylgruppenhaltige PolymethacrylatPolyole, und Polyisocyanate (B), bei denen ein Teil der Isocyanatgruppen mit einer Mischung aus 2,5 bis 97,5 mol-% Monoalkoxysilylamin und 2,5 bis 97,5 mol-% Bisalkoxysilylamin umgesetzt worden ist. Der Gesamtanteil der mit den Monoalkoxysilylaminen und Bisalkoxysilylaminen umgesetzten Isocyanatgruppen liegt in der Polyisocyanatverbindung (B) zwischen 5 und 95 mol-%, bevorzugt zwischen 10 und 90 mol-%, besonders bevorzugt zwischen 15 und 85 mol-%.

Diese Beschichtungsmittel sind ebenso wie die aus der EP-A-1 273 640 bekannten Beschichtungsmittel rein lösemittelbasierend formuliert. Aus ökologischen und ökonomischen Gründen ist man jedoch bestrebt, den Anteil der in Beschichtungsmitteln eingesetzten konventionellen Lösemittel möglichst weitgehend zu reduzieren. Insbesondere auf dem Gebiet der Beschichtung von Automobil-Anbauteilen, aber auch im Bereich der Autoreparaturlackierung, besteht verstärkt der Wunsch nach emissionsarmen Beschichtungsmitteln.

Wässrige 2K Polyurethanbeschichtungsmittel sind ebenfalls seit langem bekannt. Die Komponente (I), üblicherweise als Stammlack bezeichnet, ist dabei wässrig formuliert und enthält die gegenüber Wasser unempfindlichen Bestandteile, insbesondere die hydroxylgruppenhaltige Verbindung (A). Die Komponente (II) enthält die isocyanatgruppenhaltige Verbindung (B) sowie ggf. weitere gegenüber Wasser empfindliche Verbindungen.

Weiterhin sind auch beispielsweise aus der EP-B-707 608 wässrige 2K Polyurethanbeschichtungsmittel bekannt, bei denen das hydroxylgruppenhaltige Bindemittel ggf. zusätzlich Alkoxysilangruppen aufweisen kann. Wesentlich bei den dort beschriebenen Beschichtungsmitteln ist, dass als Aufbaukomponente für die hydroxylgruppenhaltigen Bindemittel mindestens ein Vinylester von in alpha-Stellung verzweigten Monocarbonsäuren oder das Umsetzungsprodukt aus (Meth)Acrylsäure mit dem Glycidylester einer in alpha-Stellung verzweigten Monocarbonsäure eingesetzt wird.

Die DE-C-196 24 972 beschreibt wässrige Dispersionen von silanfunktionellen Polyurethanharzen und deren Verwendung als hydroxylgruppenhaltiges Bindemittel in wässrigen 2K Polyurethanbeschichtungsmitteln. Die dort beschriebenen Beschichtungsmittel weisen eine hohe Ablaufsicherheit und Blasenfreiheit auf und führen zu Beschichtungen mit einer guten Chemikalien,- Benzin- und Feuchtraumbeständigkeit.

Problematisch ist bei diesen wässrigen Beschichtungsmitteln aber immer der Silananteil, der in der wässrigen Dispersion vorliegt, da die Gefahr der Gelierung und hierdurch bedingt nur eine unzureichende Lagerstabilität besteht. Um die Gelierung zu vermeiden und eine ausreichende Lagerstabilität zu erreichen, muss in diesen Systemen der Silananteil begrenzt werden, was wiederum nur eine begrenzte Kratzfestigkeit der resultierenden Beschichtungen zur Folge hat.

Aus der EP-B-872 499 sind schließlich wässrige Polyurethanbeschichtungsmittel bekannt, die neben einer hydroxylgruppenhaltigen Verbindung als Vernetzungsmittel Polyisocyanate enthalten, bei denen 0,8 bis 50 mol-%, bevorzugt 1,5 bis 20 mol-% der Isocyanatgruppen mit Monoalkoxysilylaminen umgesetzt sind. Diese dort beschriebenen Beschichtungsmittel zeichnen sich durch eine im Vergleich zu wässrigen Polyurethanbeschichtungsmitteln auf Basis der nicht silanisierten Polyisocyanate verbesserte Wasserfestigkeit der resultierenden Beschichtungen aus.

### Aufgabe und Lösung

Aufgabe der vorliegenden Erfindung war es, emissionsarme Beschichtungsmittel, insbesondere Klarlacke, zur Verfügung zu stellen, die mit den bei der Automobilserienlackierung gebräuchlichen Applikationsverfahren verarbeitet und bei relativ niedrigen Temperaturen vernetzt werden können, so dass sie sowohl bei OEM-Serienlackierungen als auch bei Automobilreparaturlackierungen eingesetzt werden können. Das Beschichtungsmittel soll vor allem den Forderungen der Automobilhersteller nach hoher Oberflächengüte (Glanz, Verlauf) sowie sehr guter Kratzfestigkeit (hoher Glanzerhalt nach Kratzbelastung) bei gleichzeitig guter Erichsentiefung von mehr als 8,0 mm (Mittelwert aus mindestens 6 Messungen) sowie guter Beständigkeit gegen chemische Agenzien, insbesondere Natronlauge, entsprechen.

Dabei sollten sowohl die Bindemittel-Komponente als auch die Vernetzer-Komponente eine hohe Lagerstabilität und nach Vermischung der Bindemittel- und der Vernetzer-Komponente das Beschichtungsmittel eine ausreichend lange Verarbeitungszeit (sogenannte Topfzeit) aufweisen.

Darüber hinaus sollten die Beschichtungsmittel die üblicherweise an die Klarlackschicht bei Automobilserienlackierungen und Autoreparaturlackierungen gestellten Anforderungen erfüllen. Schließlich sollten die neuen Beschichtungsmittel einfach und sehr gut reproduzierbar herstellbar sein und während der Lackapplikation keine ökologischen Probleme bereiten.

### Lösung der Aufgabe

Im Lichte der obengenannten Aufgabenstellung wurden Beschichtungsmittel gefunden, enthaltend mindestens eine hydroxylgruppenhaltige Verbindung (A), mindestens eine Verbindung (B) mit freien und/oder blockierten Isocyanatgruppen sowie mit hydrolysierbaren Silangruppen und mindestens einen Katalysator (C) für die Vernetzung von Silangruppen, dadurch gekennzeichnet, dass die Verbindung (B)

10 mol-% bis 80 mol-%, bezogen auf die Gesamtheit der Struktureinheiten (I) und (II), mindestens einer Struktureinheit der Formel (I)

-N(X-SiR"x(OR')3-x)n(X'-SiR"y(OR')3-y)m (I)

wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/- oder Methyl
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 , sowie
x, y = 0 bis 2,
und
mehr als 10 mol-% bis 90 mol-%, bezogen auf die Gesamtheit der Struktureinheiten (I) und (II), mindestens eine Struktureinheit der Formel (II)

-Z-(X-SiR"x(OR')3-x) (II),

wobei
Z = -NH-, -NR-, -O-, -S-, bevorzugt -NH- oder -NR- mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
x = 0 bis 2, und
X, R', R" die bei Formel (I) angegebene Bedeutung haben, aufweist, und in der Verbindung (B) der Anteil der zu den Struktureinheiten (I) und (III) umgesetzten Isocyanatgruppen zwischen 10 und 60 mol-% liegt. Im Hinblick auf den Stand der Technik war es überraschend und für den Fachmann nicht vorhersehbar, dass die Aufgaben, die der vorliegenden Erfindung zugrunde lagen, mit Hilfe des erfindungsgemäßen Beschichtungsmittels gelöst werden konnten.

Die erfindungsgemäßen Beschichtungsmittel liefern neue Beschichtungen und Lackierungen, speziell Klarlackierungen, die hoch kratzfest sind (hoher Glanzerhalt nach Kratzbelastung) und die im Gegensatz zu gängigen hochvernetzten kratzfesten Systemen eine gute Beständigkeit gegen chemische Agenzien, insbesondere gegenüber Natronlauge, bei gleichzeitig guter Erichsentiefung von mehr als 8,0 mm (Mittelwert aus mindestens 6 Messungen) aufweisen. Daneben weisen die Beschichtungsmittel einen guten Verlauf auf und führen zu Beschichtungen mit hoher Oberflächengüte (Glanz).

Deswegen können die erfindungsgemäßen Beschichtungen und Lackierungen, insbesondere die Klarlackierungen, in dem technologisch und ästhetisch besonders anspruchsvollen Gebiet der Automobilserienlackierung (OEM) eingesetzt werden. Sie eignen sich hierbei insbesondere auch für die Beschichtung von Automobil-Anbauteilen und können ebenfalls im Bereich der Autoreparaturlackierung eingesetzt werden.

Die erfindungsgemäßen Komponenten können besonders einfach und sehr gut reproduzierbar hergestellt werden weisen eine hervorragende Lagerstabilität und nach Vermischung der Bindemittel- und der Vernetzer-Komponente eine ausreichend lange Verarbeitungszeit (sogenannte Topfzeit) auf. Außerdem bereiten sie bei der Lackapplikation keine signifikanten toxikologischen und ökologischen Probleme.

### Beschreibung der Erfindung

Erfindungsgemäß können Beschichtungsmittel mit bereit gestellt werden, die hoch kratzfest sind (hoher Glanzerhalt nach Kratzbelastung) und die im Gegensatz zu gängigen hochvernetzten kratzfesten Systemen aber auch eine gute Beständigkeit der Beschichtungen gegen chemische Agenzien, insbesondere gegenüber Natronlauge, bei gleichzeitig guter Erichsentiefung von mehr als 8,0 mm (Mittelwert aus mindestens 6 Messungen) aufweisen. Dabei sind die erfindungsgemäßen Beschichtungsmittel zumindest anteilig wässrig formuliert und tragen somit dem verstärkten Wunsch nach Reduzierung der eingesetzten Lösemittel Rechnung. Sie eignen sich hierbei insbesondere auch für die Beschichtung von Automobil-Anbauteilen und können ebenfalls im Bereich der Autoreparaturlackierung eingesetzt werden.

### Die hydroxylgruppenhaltige Verbindung (A)

Als hydroxylgruppenhaltige Verbindung (A) werden vorzugsweise sowohl niedermolekulare Polyole als auch oligo- und/oder polymere Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerytritol sowie Dipentaerytritol, eingesetzt.

Bevorzugt werden solche niedermolekularen Polyole in untergeordneten Anteilen der oligo- und/oder polymeren Polyolkomponente (A) beigemischt.

Die bevorzugten oligo- und/oder polymeren Polyole (A) weisen massenmittlere Molekulargewichte Mw > 500 Dalton, gemessen mittels GPC (Gelpermeationschromatographie), bevorzugt zwischen 800 und 100.000 Dalton, insbesondere zwischen 1.000 und 50.000 Dalton auf.

Die Glasübergangstemperaturen, gemessen per DSC (DifferentialThermoanalyse), der Polyole (A) liegen bevorzugt zwischen -150 und 100 °C, besonders bevorzugt zwischen -120°C und 80°C.

Außerdem sind oligo- und/oder polymere Polyole (A) bevorzugt, die eine OH-Zahl von 30 bis 400 mgKOH/g, bevorzugt 100 bis 300 mgKOH/g, aufweisen.

Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2).

Auch durch die Auswahl der hydroxylgruppenhaltigen Bindemittel können die Eigenschaften der endgehärteten Beschichtung beeinflusst werden. Im Allgemeinen kann nämlich mit steigender OH-Zahl der Komponente (A) der Silanisierungsgrad, d.h. die Menge Struktureinheiten der Formeln (I) und (II), erniedrigt werden, was wiederum einen positiven Einfluss auf die Witterungsbeständigkeit der endgehärteten Beschichtung zur Folge hat.

Insbesondere werden hydroxylgruppenhaltige Verbindungen (A) eingesetzt, die wasserverdünnbar sind. Die hydroxylgruppenhaltigen Verbindungen (A) weisen daher bevorzugt eine ihre Löslichkeit und/oder Dispergierbarkeit in Wasser bewirkende Menge an hydrophilen Gruppen auf.

Die hydroxylgruppenhaltigen Verbindungen (A) können daher ionische Gruppen, zur lonenbildung befähigte Gruppen und/oder hydrophile, nichtionische Gruppen aufweisen. Zur lonenbildung befähigte Gruppen sind funktionelle Gruppen, wie saure oder basische Gruppen, die durch Neutralisation mit Basen oder Säuren in ionische Gruppen überführt werden.

Als basische, in Kationen überführbare Gruppen kommen beispielsweise primäre, sekundäre und tertiäre Aminogruppen und als kationische Gruppen quartäre Ammonium, Phosphonium- und Sulfoniumgruppen in Betracht.

Bevorzugt sind anionische oder zur Anionenbildung befähigte Gruppen. Als saure, zur Anionenbildung befähigte Gruppen kommen z.B. Carboxylgruppen, Phosphorsäuregruppen, Phosphonsäuregruppen und Sulfonsäuregruppen in Betracht. Bevorzugt sind Carboxylgruppen, Phosphonsäuregruppen und/oder Sulfonsäuregruppen. Bevorzugt werden daher hydroxylgruppenhaltige Verbindungen (A) mit einer Säurezahl von 30 bis 1, besonders bevorzug von 20 bis 5 mg KOH/g eingesetzt.

Die Säurezahl gibt hierbei die Anzahl der mg Kaliumhydroxid an, die zur Neutralisation von 1 g der jeweiligen Verbindung der Komponente (A) verbraucht wird (DIN EN ISO 2114).

Besonders bevorzugte hydroxylgruppenhaltige Verbindungen (A) sind Polyesterpolyole, Polyurethanpolyole und insbesondere Polyacrylatpolyole und/oder Polymethacrylatpolyole sowie deren Mischpolymerisate, im folgenden Polyacrylatpolyole genannt.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben.

Die erfindungsgemäß ganz besonders bevorzugten Polyacrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard. Die Glasübergangstemperatur der Copolymerisate liegt in der Regel zwischen -100 und 100 °C, insbesondere zwischen -50 und 80 °C (gemessen mittels DSC-Messungen).

Die Polyacrylatpolyole (A) weisen bevorzugt eine OH-Zahl von 60 bis 250 mg KOH/g, insbesondere zwischen 70 und 200 mgKOH/g, auf.

Besonders bevorzugt werden Polyacrylatpolyole (A) mit einer Säurezahl zwischen 20 und 5 mg KOH/g, eingesetzt.

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2- Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat, eingesetzt.

Die Einführung der Carboxylgruppen erfolgt bevorzugt durch Verwendung ethylenisch ungesättigter Carbonsäuren als Monomerbausteine, wie beispielsweise der Acryl- und/oder Methacrylsäure, der Ethacrylsäure, der Crotonsäure und/oder der Vinylphosphonsäure u.Ä., insbesondere der Acryl- und/oder Methacrylsäure und/oder Vinylphosphonsäure.

Als weitere Monomerbausteine werden für die Polyacrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Polyacrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether eingesetzt werden.

Die erfindungsgemäß bevorzugt eingesetzten hydroxylgruppenhaltigen Verbindungen (A) sind erhältlich, indem in einem organischen Lösemittel oder Lösemittelgemisch und bevorzugt in Gegenwart eines Polymerisationsinitiators bzw. geeigneten Katalysators ein hydroxyl- und säuregruppenhaltiges Oligomer und/oder Polymer hergestellt wird und die so erhaltene hydroxyl- und säuregruppenhaltige Verbindung teilweise neutralisiert und in Wasser dispergiert wird.

Der jeweils einzustellende Neutralisationsgrad hängt von der Säurezahl der Verbindung (A) ab und liegt im Allgemeinen bei Säurezahlen < 70 mg KOH/g zwischen 50 und 90% und bei Säurezahlen > 70 mgKOH/g zwischen 30 und 80%. Zur Neutralisation können sowohl organische als auch anorganische Basen verwendet werden. Bevorzugt werden primäre, sekundäre und/oder tertiäre Amine, wie z.B. Ethylamin, Propylamin, Dimethylamin, Dibutylamin, Cyclohexylamin, Benzylamin, Morpholin, Piperidin, Diethanolamin und Triethanolamin verwendet, insbesondere tertiäre Amine, ganz besonders bevorzugt, Dimethylethanolamin, Triethylamin und Dimethylisopropylamin, Tripropylamin und Tributylamin.

Die Neutralisationsreaktion wird im Allgemeinen durch Mischen der neutralisierenden Base mit der Lösung der hydroxyl- und säuregruppenhaltigen Verbindung (A) durchgeführt. Dabei wird im Allgemeinen soviel Base eingesetzt, dass die resultierende Dispersion einen pH-Wert von 6 bis 9, vorzugsweise 7 bis 8, aufweist. Anschließend wird das partiell oder vollständig neutralisierte Polymer durch Zugabe von Wasser dispergiert. Dabei entsteht eine wässrige Dispersion der hydroxylgruppenhaltigen Verbindung (A). Gegebenenfalls kann anschließend noch ein Teil oder das gesamte organische Lösemittel abdestilliert werden.

### Die isocyanatgruppenhaltige Verbindung (B) mit hydrolysierbaren Silangruppen

Die erfindungsgemäßen Beschichtungsmittel enthalten eine oder mehrere Verbindungen (B) mit freien, d.h. unblockierten, und/oder blockierten Isocyanatgruppen sowie mit hydrolysierbaren Silangruppen. Bevorzugt enthalten die erfindungsgemäßen Beschichtungsmittel Verbindungen (B) mit freien Isocyanatgruppen. Die Isocyanatgruppen der isocyanatgruppenhaltigen Verbindungen (B) können aber auch in blockierter Form eingesetzt werden.

Die als Grundkörper für die erfindungsgemäß eingesetzten, Isocyanatgruppen und hydrolysierbare Silangruppen enthaltenden Verbindungen (B) dienenden Di- und/oder Polyisocyanate (PI) sind bevorzugt an sich bekannte substituierte oder unsubstituierte aromatische, aliphatische, cycloaliphatische und/oder heterocyclische Polyisocyanate.

Beispiele für bevorzugte Polyisocyanate (PI) sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG), Tetramethylxylyldiisocyanate (z.B. TMXDI ® der Fa. American Cyanamid) und Mischungen der vorgenannten Polyisocyanate. Weiterhin bevorzugte Polyisocyanate (PI) sind die Biuret-Dimere und die Isocyanurat-Trimere der vorgenannten Diisocyanate.

Besonders bevorzugte Polyisocyanate (PI) sind Hexamethylen-1,6-diisocyanat, Isophorondiisocyanat und 4,4'-Methylendicyclohexyldiisocyanat, deren Biuret-Dimere und/oder Isocyanurat-Trimere.

In einer weiteren Ausführungsform der Erfindung sind die Polyisocyanate (PI) Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4, 598,131 beschrieben.

Die erfindungsgemäß eingesetzten, Isocyanatgruppen und hydrolysierbare Silangruppen enthaltenden Verbindungen (B) können hydrophil modifiziert sein. Die Verbindungen (B) können daher hydrophile Gruppen, beispielsweise ionische Gruppen, zur lonenbildung befähigte Gruppen und/oder hydrophile, nichtionische Gruppen aufweisen. Zur lonenbildung befähigte Gruppen sind funktionelle Gruppen, wie saure oder basische Gruppen, die durch Neutralisation mit Basen oder Säuren in ionische Gruppen überführt werden. Bevorzugte hydrophile Gruppen sind Polyethergruppen und/oder zur Anionenbildung befähigte Gruppen. Als saure, zur Anionenbildung befähigte Gruppen kommen z.B. Carboxylgruppen, Phosphorsäuregruppen, Phosphonsäuregruppen und Sulfonsäuregruppen in Betracht. Bevorzugt sind in der Regel Sulfonsäuregruppen, da sie bezüglich Dispergierbarkeit am effektivsten sind.

Als Beispiel für Verbindungen (B) mit hydrophilen, nichtionischen Gruppen können beispielsweise solche auf Basis von Di- und/oder Polyisocyanaten (PI), die zumindest teilweise Polyetherketten mit eingebauten Ethylenoxideinheiten oder eingebauten Propylenoxideinheiten enthalten, genannt werden.

Hydrophil modifizierte Di- und/oder Polyisocyanate (PI) sind bekannt. Im Handel sind hydrophil modifizierte Di- und/oder Polyisocyanate beispielsweise unter der Bezeichnung Bayhydur®, beispielsweise Bayhydur® 304, Bayhydur® 305, Bayhydur® 3100, Bayhydur® 401 - 70 und Bayhydur® BL5140 der Firma Bayer Material Science AG, und unter der Bezeichnung Basonat®, beispielsweise Basonat® HW100 und Basonat® HW180PC der Firma BASF SE, erhältlich.

Es ist erfindungswesentlich, dass die isocyanatgruppenhaltigen Verbindungen (B)

10 mol-% bis 80 mol-%, bezogen auf die Gesamtheit der Struktureinheiten (I) und (II), mindestens einer Struktureinheit der Formel (I)

-N(X-SiR"x(OR')3-x)n(X'-SiR"y(OR')3-y)m (I)

wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
bevorzugt R' = Ethyl und/oder Methyl
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 , sowie x, y = 0 bis 2,
und
mehr als 10 mol-% bis 90 mol-%, bezogen auf die Gesamtheit der Struktureinheiten (I) und (II), mindestens eine Struktureinheit der Formel (II)

-Z-(X-SiR"x(OR')3-x) (II),

wobei
Z = -NH-, -NR-,-O-, -S-, insbesondere -NH- oder-N R- mit
R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
x = 0 bis 2,
X, R', R" die bei Formel (I) angegebene Bedeutung haben, aufweist, und in der Verbindung (B) der Anteil der zu den Struktureinheiten (I) und (III) umgesetzten Isocyanatgruppen zwischen 10 und 60 mol-% liegt. Besonders bevorzugt sind Beschichtungsmittel, bei denen die Verbindung (B) zwischen 20 und 80 mol-%, bevorzugt zwischen 30 und 70 mol-%, insbesondere zwischen 40 und 60 mol-%, jeweils bezogen auf die Gesamtheit der Struktureinheiten (I) und (II), mindestens einer Struktureinheit der Formel (I) und
   zwischen 20 und 80 mol-%, bevorzugt zwischen 30 und 70 mol-%, insbesondere zwischen 40 und 60 mol-%, jeweils bezogen auf die Gesamtheit der Struktureinheiten (I) und (II), mindestens einer Struktureinheit der Formel (II) aufweist.

Ebenfalls wesentlich für die Erfindung sind Beschichtungsmittel, bei denen in der Verbindung (B) der Anteil der zu den Struktureinheiten (I) und (II) umgesetzten Isocyanatgruppen zwischen 10 und 60 mol-%, bevorzugt zwischen 20 und 50 mol-% und besonders bevorzugt bei mehr als 20 mol-% bis 40 mol-% liegt. Ein Silanisierungsgrad (also der Anteil der zu den Struktureinheiten (I) und (II) umgesetzten Isocyanatgruppen) von 10 mol-% bedeutet dabei, dass 10 mol-% der ursprünglich vorhandenen Isocyanatgruppen zu den Struktureinheiten (I) und (II) umgesetzt sind.

Struktureinheiten der Formel (I) können in die Verbindung (B) durch teilweise Umsetzung der Isocyanatgruppen der Polyisocyanate (PI) mit einer Verbindung der Formel (la)

HN(X-SiR"x(OR')3-x)n(X'-SiR"y(OR')3-y)m (Ia),

eingeführt werden, wobei die Substituenten die obengenannte Bedeutung haben.

Struktureinheiten der Formel (II) können in die Verbindung (B) durch teilweise Umsetzung der Isocyanatgruppen der Polyisocyanate (PI) mit einer Verbindung der Formel (IIa)

H-Z-(X-SiR"x(OR')3-x) (IIa),

eingeführt werden, wobei die Substituenten die obengenannte Bedeutung haben.

Die Umsetzung der Polyisocyanate (PI) mit den Verbindungen (la) und (IIa) erfolgt vorzugsweise in Inertgasatmosphäre bei Temperaturen von maximal 100 °C, bevorzugt von maximal 60 °C.

Erfindungsgemäß bevorzugte Verbindungen (la) sind Bis(2-ethyltrimethoxysilyl)amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. DEGUSSA bzw. Silquest ® der Fa. OSI verfügbar.

Erfindungsgemäß bevorzugte Verbindungen (IIa) sind omega-Aminoalkyl- oder omega-Hydroxyalkyltrialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, 4-Aminobutyltriethoxysilan, 2-Hydroxyethyltrimethoxysilan, 2-Hydroxyethyltriethoxysilan, 3-Hydroxypropyltrimethoxysilan, 3-Hydroxypropyltriethoxysilan, 4-Hydroxybutyltrimethoxysilan, 4-Hydroxybutyltriethoxysilan. Besonders bevorzugte Verbindungen (IIa) sind N-(2- (trimethoxysilyl)ethyl)alkylamine, N-(3-(trimethoxysilyl) propyl)alkylamine, N-(4-(trimethoxysilyl) butyl)alkylamine, N-(2-(triethoxysilyl)ethyl)alkylamine, N-(3-(triethoxysilyl) propyl)alkylamine und/oder N-(4-(triethoxysilyl) butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. DEGUSSA bzw. Silquest ® der Fa. OSI verfügbar.

Im Allgemeinen nimmt nun bei gleichem Silanisierungsgrad mit steigendem Anteil an monofunktionellem Silan (II) die Beständigkeit der endgehärteten Beschichtung gegenüber Natronlauge zu, gleichzeitig nimmt aber auch die Kratzfestigkeit ab. Im Allgemeinen nimmt außerdem mit steigendem Anteil an difunktionellem Silan (I) die Beständigkeit der endgehärteten Beschichtung gegenüber Natronlauge ab, gleichzeitig nimmt aber die Kratzfestigkeit zu. Bei hohen Anteilen an difunktionellem Silan sind daher entsprechend andere Maßnahmen zur Erhöhung der Beständigkeit gegenüber Chemikalien, insbesondere gegenüber Natronlauge, zu ergreifen, um die erfindungsgemäßen Beschichtungsmittel zur Verfügung zu stellen. Insbesondere kann der Silanisierungsgrad insgesamt erniedrigt werden, d.h. es kann der Anteil der insgesamt mit einem Silan umgesetzten Isocyanatgruppen entsprechend niedrig gewählt werden.

Außerdem wird mit steigendem Silanisierungsgrad (also steigendem Gesamtanteil der mit den Verbindungen (la) und (IIa) umgesetzten Isocyanatgruppen) und steigendem Anteil an difunktionellen Silan (la) der Einfluss des Katalysators auf die Eigenschaften der resultierenden Beschichtung immer größer, so dass dann insbesondere aminblockierte Phosphorsäure-basierende Katalysatoren zum Einsatz kommen.

Dabei können auch nicht funktionelle Substituenten am organofunktionellen Silan, das zur Einführung der Silan-Struktureinheiten eingesetzt wird, die Reaktivität der hydrolysierbaren Silangruppe beeinflussen. Beispielhaft sei dies erläutert am Beispiel von voluminösen, sperrigen Substituenten an der Aminfunktion, die die Reaktivität von Aminfunktionellen Silanen reduzieren können. Vor diesem Hintergrund ist N-(n-Butyl)-3-aminopropyltrimethoxysilan bevorzugt vor N-Cyclohexyl-3-aminopropyltrimethoxysilan zur Einführung der Silan-Struktureinheiten (II).

Ganz allgemein sind die Reste, die die Reaktivität der Silane erhöhen, bevorzugt gegenüber Resten, die die Reaktivität der Silane herabsetzen.

Ganz besonders bevorzugte isocyanatgruppenhaltige Verbindungen (B) sind Umsetzungsprodukte von Hexamethylen-1,6-diisocyanat und/oder Isophorondiisocyanat und/oder 4,4'-Methylendicyclohexyldiisocyanat und/oder deren Isocyanurat-Trimere mit Bis(3-propyltrimethoxysilyl)amin und N-(3-(trimethoxysilyl) propyl)butylamin.

### Der Katalysator (C) für die Vernetzung der Silangruppen

Als Katalysatoren für die Vernetzung der Alkoxysilyl-Einheiten sowie für die Reaktion zwischen den Hydroxylgruppen der Verbindung (A) und den freien Isocyanatgruppen der Verbindung (B) können an sich bekannte Verbindungen eingesetzt werden. Beispiele sind Lewis-Säuren (Elektronenmangelverbindungen), wie beispielsweise Zinnnaphtenat, Zinnbenzoat, Zinnoctoat, Zinnbutyrat, Dibutylzinndilaurat, Dibutylzinndiacetat, Dibutylzinnoxid, Bleioctoat, sowie Katalysatoren wie in WO-A-2006/042585 beschrieben.

Es ist aber bevorzugt, dass als Katalysator (C) phosphorhaltige, insbesondere phosphor- und stickstoff-haltige Katalysatoren eingesetzt werden. Dabei können auch Mischungen aus zwei oder mehreren verschiedenen Katalysatoren (C) eingesetzt werden.

Beispiele für geeignete phosphorhaltige Katalysatoren (C) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern.

So können beispielsweise acyclische Phosphonsäurediester der allgemeinen Formel 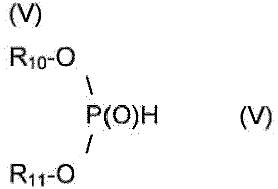 oder cyclische Phosphonsäurediester der allgemeinen Formel (VI) 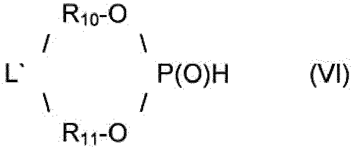 eingesetzt werden.

In der allgemeinen Formel (V) und (VI) sind die Reste R₁₀ und R₁₁ gleich oder voneinander verschieden; vorzugsweise sind sie gleich, und haben die weiter unten bei Formel (IV) angegebene Bedeutung.

In der allgemeinen Formel (VI) steht die Variable L' für
- eine kovalente Bindung zwischen einem Atom des Rests R₁₀ und einem Atom des Rests R₁₁;
- eine zweibindige, verknüpfende Gruppe, ausgewählt aus der Gruppe, bestehend aus Sauerstoffatom, substituiertem, insbesondere mit Alkyl substituiertem, Stickstoffatom, substituiertem, insbesondere mit Sauerstoff substituiertem, Phosphoratom und substituiertem, insbesondere mit Alkyl und Alkoxy substituiertem Siliciumatom, insbesondere Sauerstoffatom; oder
- eine zweibindige, verknüpfende Gruppe, ausgewählt aus der Gruppe, bestehend aus substituiertem und unsubstituiertem, mindestens ein Heteroatom, ausgewählt aus der Gruppe, bestehend aus Sauerstoffatom, Schwefelatom, Stickstoffatom, Phosphoratom und Siliciumatom, insbesondere Sauerstoffatom, Schwefelatom und Stickstoffatom, enthaltendem oder von Heteroatomen freiem Alkyl mit 1 bis 10, vorzugsweise 1 bis 6 und insbesondere 1 bis 4 Kohlenstoffatomen, Cycloalkyl mit 3 bis 10, vorzugsweise 3 bis 6 und insbesondere 6 Kohlenstoffatomen und Aryl mit 5 bis 10 und insbesondere 6 Kohlenstoffatomen.

Ferner können auch beispielsweise acyclische Diphosphonsäurediester (C) der allgemeinen Formel (VII):

(R₁₀-O)(O)PH-O-PH(O)(O-R₁₁) (VII);

worin die Variablen die vorstehend angegebene Bedeutung haben, eingesetzt werden. Derartige Katalysatoren sind beispielsweise in der deutschen Patentanmeldung DE-A-102005045228 beschrieben.

Insbesondere werden aber substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-mono- und -di-ester, eingesetzt. Dabei werden die acyclischen Phosphorsäurediester (C) insbesondere aus der Gruppe, bestehend aus acyclischen Phosphorsäurediestern (C) der allgemeinen Formel (IV): 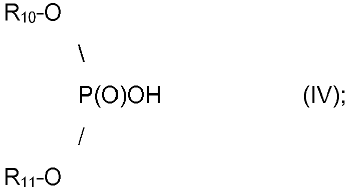 ausgewählt, wobei die Reste R₁₀ und R₁₁ aus der Gruppe, bestehend aus:
- substituiertem und unsubstituiertem Alkyl- mit 1 bis 20, vorzugsweise 2 bis 16 und insbesondere 2 bis 10 Kohlenstoffatomen, Cycloalkyl- mit 3 bis 20, vorzugsweise 3 bis 16 und insbesondere 3 bis 10 Kohlenstoffatomen und Arylmit 5 bis 20, vorzugsweise 6 bis 14 und insbesondere 6 bis 10 Kohlenstoffatomen,
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
- substituiertem und unsubstituiertem Rest- der vorstehend aufgeführten Art, enthaltend mindestens ein, insbesondere ein, Heteroatom, ausgewählt aus der Gruppe bestehend aus Sauerstoffatom, Schwefelatom, Stickstoffatom, Phosphoratom und Siliziumatom, insbesondere Sauerstoffatom, Schwefelatom und Stickstoffatom
ausgewählt werden und zusätzlich auch Wasserstoff darstellen können (Teilveresterung).

Ganz besonders bevorzugt werden als Katalysator (C) die entsprechenden aminblockierten Phosphorsäureester, und hier insbesondere aminblockierte Phosphorsäureethylhexylester und aminblockierte Phosphorsäurephenylester, ganz besonders bevorzugt amin-blockierter Phosphorsäure-bis(2-ethylhexyl)ester eingesetzt.

Als Beispiele für Amine, mit welchem die Phosphorsäureester blockiert werden, sind insbesondere tertiäre Amine, beispielsweise Triethylamin, zu nennen. Besonders bevorzugt werden zur Blockierung der Phosphorsäureester tertiäre Amine eingesetzt, die eine gute Wirksamkeit des Katalysators bei den jeweiligen Härtungsbedingungen gewährleisten. Insbesondere wenn die Beschichtungsmittel im Bereich der Reparaturlackierung oder zur Beschichtung von Kunststoffen, wie Karosserie-Anbauteilen, eingesetzt werden, werden bevorzugt als Katalysator (C) ein mit Amin mit einem pKb-Wert > 3 und einem Siedepunkt > 100°C blockierte Phosphorsäureverbindung, insbesondere Phosphorsäure oder Phosphonsäure, verwendet. Als Beispiele für solche bevorzugten Amine, mit welchem die Phosphorsäureester blockiert werden, sind neben Diazabicyclooctan (DABCO) zum Beispiel N-Dimethyl-benzylamin und N-Methyl-morpholin zu nennen. Die Bestimmung des pKb-Wertes ist in der WO 09/077180, Seite 34, Zeile 1, bis Seite 38, Zeile 9, beschrieben.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines Amin - blockierten Phosphorsäureteilesters genannt.

Die Katalysatoren werden vorzugsweise in Anteilen von 0,01 bis 20 Gew.-%, besonders bevorzugt in Anteilen von 0,1 bis 10 Gew.-%, bezogen auf die nicht flüchtigen Bestandteile des erfindungsgemäßen Beschichtungsmittels, eingesetzt. Eine geringere Wirksamkeit des Katalysators kann dabei durch entsprechend höhere Einsatzmengen teilweise kompensiert werden.

### Die Kombination der Komponenten A und B sowie weitere Komponenten des Beschichtungsmittels

Der Gewichtsanteil der einzusetzenden hydroxylgruppenhaltigen Verbindungen A, bezogen auf den Gewichtsanteil der isocyanatgruppenhaltigen Verbindungen B, hängt vom Hydroxyäquivalentgewicht des Polyols und vom Äquivalentgewicht der freien Isocyanatgruppen des Polyisocyanates B ab.

Die erfindungsgemäßen Beschichtungsmittel enthalten bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der hydroxylgruppenhaltigen Verbindungen (A) und bevorzugt zwischen 2,5 und 97,5 Gew.-%, besonders bevorzugt zwischen 5 und 95 Gew.-%, ganz besonders bevorzugt zwischen 10 und 90 Gew.-%, insbesondere zwischen 20 und 80 Gew.-%, bezogen auf den Gehalt an nichtflüchtigen Substanzen im Beschichtungsmittel, der isocyanatgruppenhaltigen Verbindungen (B).

Die Gewichtsanteile des Polyols A und des Polyisocyanates B werden vorzugsweise solchermaßen gewählt, dass das molare Äquivalentverhältnis der nicht umgesetzten Isocyanatgruppen der isocyanathaltigen Verbindungen (B) zu den Hydroxylgruppen der hydroxylgruppenhaltigen Verbindungen (A) zwischen 0,7:1 und 1,3:1, bevorzugt zwischen 0,9:1 und 1,1:1, besonders bevorzugt zwischen 0,95:1 und 1,05:1, liegt.

Bei den erfindungsgemäßen Zwei- oder Mehr-Komponenten Beschichtungsmitteln wird kurz vor der Applikation des Beschichtungsmittel die Komponente (I) enthaltend die hydroxylgruppenhaltige Verbindung (A) sowie ggf. weitere nachfolgend beschriebene Komponenten,
mit
der Komponente (II) enthaltend die isocyanatgruppenhaltige Verbindung (B), den Katalysator (C), ggf. organische Lösemittel und gegebenenfalls weitere der nachfolgend beschriebenen Komponenten,
und ggf. mit
einer weiteren Komponente (III) enthaltend weitere der nachfolgend beschriebenen Komponenten
in an sich bekannter Weise vermischt.

Ganz besonders bevorzugt sind Zwei- oder Mehr-Komponenten Beschichtungsmittel, bei denen die Komponente (II) im Wesentlichen wasserfrei ist. Im Wesentlichen wasserfrei bedeutet dabei, dass die Komponente (II) weniger als 1,0 Gew.-% Wasser, bezogen auf das Gewicht der isocyanatgruppenhaltigen Verbindung (B), enthält. Insbesondere enthält die Komponente (II) gar kein Wasser.

Entsprechend sind Zwei- oder Mehr-Komponenten Beschichtungsmittel bevorzugt, bei denen die Komponente (I) und/oder die Komponente (III) Wasser enthält.

Drei-Komponenten-Beschichtungsmitteln weisen zusätzlich zu der beschriebenen im Wesentlichen wasserfreien Komponente (II) entweder
- eine ebenfalls im Wesentlichen wasserfreie Komponente (I) und eine wasserhaltige Komponente (III) oder
- eine ebenfalls im Wesentlichen wasserfreie Komponente (III) und eine wasserhaltige Komponente (I) oder
- sowohl eine wasserhaltige Komponente (I) als auch eine wasserhaltige Komponente (III)
auf. Drei-Komponenten-Beschichtungsmittel werden in der Regel eingesetzt, um hochfestkörperreiche System vor Ort auf Verarbeitungsviskosität einzustellen.

Üblicherweise enthält die Komponente (II) enthaltend die isocyanatgruppenhaltige Verbindung (B) noch organisches Lösemittel. Der Lösemittelgehalt der Komponente (II) beträgt dabei üblicherweise von 0 bis 60 Gew.-%, bevorzugt von 20 bis 50 Gew.-%, jeweils bezogen auf das Gewicht der isocyanatgruppenhaltigen Verbindung (B).

Ferner können auch die anderen Komponenten, insbesondere die Komponente (I) und/oder (III), noch organisches Lösemittel enthalten. Bevorzugt sind erfindungsgemäß Beschichtungsmittel, bei denen der Gesamtanteil an organischem Lösemittel zwischen 0 und 40 Gew.-%, insbesondere zwischen 10 und 30 Gew.-%, jeweils bezogen auf das Gesamtgewicht des Beschichtungsmittels, beträgt. Bevorzugt liegt außerdem der Gesamtanteil an Wasser zwischen 10 und 60 Gew.-%, insbesondere zwischen 15 und 55 Gew.-%, jeweils bezogen auf das Gesamtgewicht des Beschichtungsmittels. Ebenfalls bevorzugt liegt der nichtflüchtige Anteil des Beschichtungsmittels zwischen 20 und 70 Gew.-%, bevorzugt zwischen 30 und 60 Gew.-%.

Als organisches Lösemittel für die erfindungsgemäße Komponente (I) und/oder (II) und/oder (III) sind insbesondere solche geeignet, die im Beschichtungsmittel chemisch inert gegenüber den Verbindungen (A) und/oder (B) sind und die auch bei der Härtung des Beschichtungsmittels nicht mit (A) und (B) reagieren. Bevorzugt sollten die Lösemittel mit Wasser mischbar sein.

Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln.

Neben den Verbindungen (A), (B) und (C) können noch weitere Bindemittel (E) eingesetzt werden, welche vorzugsweise mit den Hydroxylgruppen der Verbindung (A) und/oder mit den freien Isocyanatgruppen der Verbindung (B) und/oder mit den Alkoxysilylgruppen der Verbindung (B) reagieren und Netzwerkpunkte ausbilden können. Je nach Reaktivität der eingesetzten Bindemittel (E) können diese in der Komponente (I) oder (II) enthalten sein.

Beispielsweise sind als Komponente (E) Aminoplastharze und/oder Epoxyharze, verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf die nichtflüchtigen Bestandteile des Beschichtungsmittels, eingesetzt.

Darüber hinaus kann das erfindungsgemäße Beschichtungsmittel mindestens ein übliches und bekanntes Lackadditiv in wirksamen Mengen, d.h. in Mengen vorzugsweise bis zu 30 Gew.-%, besonders bevorzugt bis zu 25 Gew.-% und insbesondere bis zu 20 Gew.-%, jeweils bezogen auf die nichtflüchtigen Bestandteile des Beschichtungsmittels, enthalten.

Beispiele geeigneter Lackadditive sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
   Entschäumer;
- Reaktivverdünner, wie sie aus dem Stand der Technik allgemein bekannt sind, welche bevorzugt inert gegenüber den -Si(OR)3-Gruppen sind.
- Netzmittel wie Siloxane, fluorhaltige Verbindungen, Carbonsäurehalbester, Phosphorsäureester, Polyacrylsäuren und deren Copolymere oder Polyurethane;
- Haftvermittler wie Tricyclodecandimethanol;
- Verlaufmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- rheologiesteuernde Additive, wie die aus den Patentschriften WO 94/22968, EP-A-0 276 501, EP-A-0 249 201 oder WO 97/12945 bekannten Additive; vernetzte polymere Mikroteilchen, wie sie beispielsweise in der EP-A-0 008 127 offenbart sind; anorganische Schichtsilikate wie Aluminium-Magnesium-Silikate, Natrium-Magnesium- und Natrium-Magnesium-Fluor-Lithium-Schichtsilikate des Montmorillonit-Typs; Kieselsäuren wie Aerosile; oder synthetische Polymere mit ionischen und/oder assoziativ wirkenden Gruppen wie Polyvinylalkohol, Poly(meth)acrylamid, Poly(meth)acrylsäure, Polyvinylpyrrolidon, Styrol-Maleinsäureanhydrid- oder Ethylen-Maleinsäure-anhydrid-Copolymere und ihre Derivate oder hydrophob modifizierte ethoxylierte Urethane oder Polyacrylate;
- und /oder Flammschutzmittel.

In einer weiteren Ausführungsform der Erfindung kann das erfindungsgemäße Beschichtungsmittel noch weitere Pigmente und/oder Füllstoffe enthalten und zur Herstellung pigmentierter Topcoats dienen. Die dafür eingesetzten Pigmente und/oder Füllstoffe sind dem Fachmann bekannt.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung oder die modulare Kratzfestausrüstung von bereits lackierten Automobilkarosserien.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.
Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 30 bis 200°C, besonders bevorzugt 40 bis 190°C und insbesondere 50 bis 180°C während einer Zeit von 1 min bis zu 10 h, besonders bevorzugt 2 min bis zu 5 h und insbesondere 3 min bis 3 h, wobei bei den für die Automobilreparaturlackierung angewandten Temperaturen, die bevorzugt zwischen 30 und 90°C liegen, und bei den für Beschichtung von Kunststoff-Anbauteilen angewandten Temperaturen, die bevorzugt zwischen 50 und 90°C liegen, auch längere Härtezeiten zur Anwendung kommen können.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind. Insbesondere lassen sich die erfindungsgemäßen Beschichtungen und Lackierungen, speziell die Klarlackierungen, auch in Schichtdicken > 40 µm herstellen, ohne dass Spannungsrisse auftreten.

Die erfindungsgemäßen Beschichtungsmittel eignen sich daher hervorragend als dekorative, schützende und/oder effektgebende, hoch kratzfeste Beschichtungen und Lackierungen von Karosserien von Fortbewegungsmitteln (insbesondere Kraftfahrzeuge, wie Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM), vor allem zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., sowie der Automobilreparaturlackierung eingesetzt.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/- Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit den erfindungsgemäßen Beschichtungsmittel aufgetragen werden.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff, angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird das erfindungsgemäße Beschichtungsmittel aufgebracht. Anschließend wird die Zweischichtlackierung bevorzugt unter bei der Automobilserienlackierung angewandten Bedingungen bei Temperaturen von 30 bis 200°C, besonders bevorzugt 40 bis 190°C und insbesondere 50 bis 180°C, während einer Zeit von 1 min bis zu 10 h, besonders bevorzugt 2 min bis zu 5 h und insbesondere 3 min bis 3 h, eingebrannt, wobei bei den für die Automobilreparaturlackierung bzw. bei den für die Beschichtung von Anbauteilen angewandten Temperaturen, die im Allgemeinen zwischen 30 und 90°C liegen, auch längere Härtzeiten zur Anwendung kommen können.

Die mit dem erfindungsgemäßen Beschichtungsmittel erzeugten Schichten zeichnen sich vor allem durch eine besonders hohe Chemikalien- und Witterungsbeständigkeit sowie eine sehr gute Waschstraßenbeständigkeit und Kratzfestigkeit aus, insbesondere durch eine herausragende Kombination von Kratzfestigkeit und Witterungsstabilität gegen UV-Strahlung im Feucht-Trockenzyklus.

In einer weiteren bevorzugten Ausführungsform der Erfindung wird das erfindungsgemäße Beschichtungsmittel als transparenter Klarlack zur Beschichtung von Kunststoffsubstraten, insbesondere von KunststoffAnbauteilen, eingesetzt. Die Kunststoff-Anbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder PlasmaBehandlung des Substrats) zunächst eine pigmentierte Basislackschicht und danach eine Schicht mit den erfindungsgemäßen Beschichtungsmittel aufgetragen werden.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff, angeführten Dokumenten beschrieben. Geeignete Effekt-Basislacke zur direkten Beschichtung von aus Polypropylen bestehenden oder Polypropylen enthaltenden, nichtgrundierten Kunststoffsubstraten sind beispielsweise in der EP-B-455 211 beschrieben.

Ferner können sie auch zur Beschichtung von transparenten Kunststoffsubstraten eingesetzt werden. In diesem Fall beinhalten die Beschichtungsmittel UV-Absorber, die in Menge und Art auch auf den wirksamen UV-Schutz des Kunststoffsubstrats ausgelegt sind. Auch hier zeichnen sich die Beschichtungsmittel durch eine herausragende Kombination von Kratzfestigkeit und Witterungsstabilität gegen UV-Strahlung im Feucht-Trockenzyklus aus. Die solchermaßen beschichteten Kunststoffsubstrate werden vorzugsweise für den Ersatz von Glaskomponenten im Automobilbau eingesetzt, wobei die Kunststoffsubstrate bevorzugt aus Polymethylmethacrylat oder Polycarbonat bestehen.

### Beispiele

### Herstellung der erfindungsgemäßen Komponente B

### Herstellbeispiel B1 - Herstellung eines teilsilanisierten Polyisocyanates B1 mit einem Silanisierungsgrad von 30 Mol-% und einem Bis- / Monosilan Verhältnis von 10 Mol-% Bissilan und 90 Mol-% Monosilan

In einem Dreihalsglaskolben, ausgestattet mit einem Rückflußkühler und einem Thermometer, werden 54,4 Teile trimerisiertes Hexamethylendiisocyanat (HDI) (Desmodur® N3600, Firma Bayer Material Science), 2,4 Teile Triethylorthoformiat und 20,3 Teile Butylacetat vorgelegt. Unter Stickstoffüberschleierung und rühren wird eine Mischung aus 4,1 Teile Bis-[3-(trimethoxysilyl)propyl]amin (Dynasylan® 1124, Firma Degussa, Rheinfelden) und 18,5 Teile N-[-3-(trimethoxysilyl)-propyl]-butylamin (Dynasylan® 1189, Firma Degussa, Rheinfelden) so zudosiert, dass 50°C nicht überschritten werden. Nach Ende der Dosierung wird die Reaktionstemperatur für 60 Minuten bei 50°C gehalten. Der Blockierungsgrad wird mittels Titration überprüft (NCO Gehalt =10,9 % auf nichtflüchtigen Anteil).
Der Härter weist einen nichtflüchtigen Anteil von 77 Gew.-% auf.

### Herstellbeispiel B2 - Herstellung eines teilsilanisierten Polyisocyanates B2 mit einem Silanisierungsgrad von 30 Mol-% und einem Bis- / Monosilan Verhältnis von 50 Mol-% Bissilan und 50 Mol-% Monosilan

In einem Dreihalsglaskolben, ausgestattet mit einem Rückflußkühler und einem Thermometer, werden 53,3 Teile trimerisiertes Hexamethylendiisocyanat (HDI) (Desmodur N3600, Firma Bayer Material Science), 2,4 Teile Triethylorthoformiat und 18,1 Teile Butylacetat vorgelegt. Unter Stickstoffüberschleierung und rühren wird eine Mischung aus 16,1 Teile Bis-[3-(trimethoxysilyl)propyl]amin (Dynasylan 1124, Firma Degussa, Rheinfelden) und 10,1 Teile N-[-3-(trimethoxysilyl)-propyl]-butylamin (Dynasylan 1189, Firma Degussa, Rheinfelden) so zudosiert, das 50°C nicht überschritten werden. Nach Ende der Dosierung wird die Reaktionstemperatur für 60 Minuten bei 50°C gehalten. Der Blockierungsgrad wird mittels Titration überprüft (NCO=10,5% auf nfA).
Der Härter weist einen nichtflüchtigen Anteil von 79 Gew.-% auf.

### Herstellbeispiel B3 - Herstellung eines nichterfindungsgemäßen, teilsilanisierten Polyisocyanates B3 mit einem Silanisierungsgrad von 30 Mol-% und einem Bis- / Monosilan Verhältnis von 90 Mol-% Bissilan und 10 Mol-% Monosilan

In einem Dreihalsglaskolben, ausgestattet mit einem Rückflußkühler und einem Thermometer, werden 52 Teile trimerisiertes Hexamethylendiisocyanat (Desmodur® N3600, Firma Bayer Material Science), 2,4 Teile Triethylorthoformiat und 18 Teile Butylacetat vorgelegt. Unter Stickstoffüberschleierung und rühren wird eine Mischung aus 26,0 Teile Bis-[3-(trimethoxysilyl)propyl]amin (Dynasylan® 1124, Firma Degussa, Rheinfelden) und 2,0 Teile N-[-3-(trimethoxysilyl)-propyl]-butylamin (Dynasylan® 1189, Firma Degussa, Rheinfelden) so zudosiert, dass 50°C nicht überschritten werden. Nach Ende der Dosierung wird die Reaktionstemperatur für 60 Minuten bei 50°C gehalten. Der Blockierungsgrad wird mittels Titration überprüft (NCO Gehalt =10,4 % auf nichtflüchtigen Anteil).
Der Härter weist einen nichtflüchtigen Anteil von 80 Gew.-% auf.

### Herstellung der Stammlack-Komponente (I)

Aus den in Tabelle 1 angegebenen Komponenten wird durch Vermischen der einzelnen Komponenten die Stammlack-Komponente (I) hergestellt.

**Tabelle 1: Zusammensetzung in Gewichtsteilen der Stammlack-Komponente (I) für die erfindungsgemäßen Beispiele 1 und 2 sowie für das Vergleichsbeispiel V1**

| | |
|---|---|
| BAYHYDROL A 2470 ¹⁾ | 57,86 |
| BUTYLACETAT 98-100% | 9,5 |
| SOLVENTNAPHTHA 160/180 | 9,5 |
| Verlaufsmittel ²⁾ | 1,2 |
| Entschäumer 52% ³⁾ | 0,2 |
| TINUVIN 384-2, 95%MPA ⁴⁾ | 0,9 |
| TINUVIN 292 ⁵⁾ | 0,8 |
| NACURE 4167 ⁶⁾ | 1,9 |
| WASSER,VE | 17,3 |

| | |
|---|---|
| Erläuterungen zu Tabelle 1: ¹⁾ handelsübliche 45%ige wässrige Sekundäremulsion eines hydroxylgruppenhaltigen Polyacrylatpolymers mit einem OH-Gehalt von 3,9 %, bezogen auf den Festkörpergehalt, einer Säurezahl von 24, bezogen auf den Festkörpergehalt, neutralisiert mit Triethanolamin, einem Tg-Wert von 50°C, einem pH-Wert der Emulsion von 7,8, einer Viskosität von 2.000 mPa.s bei 23°C und einem Gehalt von 4% Propylenglykolbutylether und einem Gehalt von 4% Solventnaphta® 100 ²⁾ handelsübliches Verlaufsmittel für wässrige Systeme auf Basis eines Dimethylpolysiloxanmodifizierten Polyethers ³⁾ handelsüblicher Entschäumer auf Basis einer 52%igen Lösung eines Polymethylalkylsiloxans in Alkylbenzolen ⁴⁾ handelsübliches Lichtschutzmittel auf Basis eines Benztriazols der Firma BASF SE, 95%ig in MethoxyPropylAcetat ⁵⁾ handelsübliches Lichtschutzmittel auf Basis eines sterisch gehinderten Amins der Firma BASF SE ⁶⁾ handelsüblicher Katalysator auf Basis von aminblockiertem Phosphorsäureteilester der Firma King Industries, nicht flüchtiger Anteil 25% | |

### Herstellung der Beschichtungsmittel der Beispiele 1 und 2 sowie des Beschichtungsmittels des Vergleichsbeispiels V1

Zur Herstellung der Beschichtungsmittel der Beispiele 1 und 2 sowie des Beschichtungsmittels des Vergleichsbeispiels V1 wurden jeweils 100 Gewichtsteile der Stammlack-Komponente (I) gemäß Tabelle 1 mit 50 Gewichtsteilen der jeweiligen Härterkomponente B1 (Beispiel 1) bzw. B2 (Beispiel 2) bzw. VB1 (Vergleichsbeispiel V1) gemischt und solange verrührt, bis eine homogene Mischung entsteht.

### Herstellung der Beschichtungen der Beispiele 1 und 2 sowie der Beschichtung des Vergleichsbeispiels V1

Die Beschichtungsmittel wurden in einem geeigneten Gefäß innig miteinander vermengt und unmittelbar im Anschluss auf ein mit schwarzem Basislack lackierten Spiegelblech auflackiert (Basislacktrocknung 30 min bei 80°C, 10 min Ablüftzeit). Anschließend werden die Bleche bei 60°C 30 Minuten lang im Ofen getrocknet. Die erhaltenen Beschichtungen werden 24h bei Raumtemperatur gelagert und anschließend geprüft.

Die Kratzfestigkeit der Oberflächen der resultierenden Beschichtungen wurde mit Hilfe des Crockmeter-Tests (in Anlehnung an EN ISO 105-X12 mit 10 Doppelhüben und 9N Auflagekraft unter Verwendung von 9um Schleifpapier (3M 281Q wet or dry TM productionTM), unter anschließender Bestimmung des Restglanzes bei 20° mit einem handelsüblichen Glanzgerät bestimmt. Die Erichsentiefung der resultierenden Beschichtungen wurde nach DIN EN ISO 1520 bestimmt. Die Ergebnisse sind jeweils in Tabelle 2 dargestellt. Zur Bestimmung der Chemikalienbeständigkeit werden auf die oben beschriebenen, mit den gehärteten Beschichtungen versehenen Prüfbleche (Gradientenofenbleche der Firma Byk-Gardener) mittels einer Pipette Tropfen (ca. 0,25 ml) der zu prüfenden Substanz im Abstand von 2cm aufgebracht. In einem Temperaturgradientenofen (der Firma Byk-Gardener) werden sie 30 min einem Temperaturgradienten in Längsrichtung des Bleches von 35 bis 80°C unterworfen. Im Anschluss an die Einwirkung der Substanzen wurden diese unter fließendem Wasser entfernt und die Beschädigungen nach 24 h visuell beurteilt. Zur Beurteilung der Beständigkeit wird der Bereich (Temperatur) eines ersten sichtbaren Angriffs des Klarlacks angegeben. Die Ergebnisse sind in Tabelle 2 angegeben.

**Tabelle 2: Zusammenfassung der Prüfergebnisse der Beispiele und des Vergleichsbeispiels**

| | Beispiel 1 | Beispiel 2 | Vergleichsbeispiel V1 |
|---|---|---|---|
| Schwefelsäure 1% | 51 | 52 | 51 |
| Salzsäure 10% | 47 | 51 | 46 |
| Natronlauge 5% | 52 | 48 | <36 |
| Wasser | >76 | >77 | >76 |
| Glanz 20° | 62 | 70 | 74 |
| Glanz nach 10 Doppelhüben und nach Reflow 1h 60°C | 48 | 66 | 63 |
| Glanzerhalt nach 10 Doppelhüben und nach Reflow 1h 60°C | 77% | 94% | 85% |
| Erichsentiefung (mm) | 9,1 | 9,3 | 8,7 |

### Diskussion der Prüfergebnisse:

Die erfindungsgemäßen Beschichtungen der Beispiele B1 und B2 zeigen eine gute Chemikalienbeständigkeit sowohl gegenüber sauren Reagenzien als auch gegenüber Natronlauge als auch gegenüber Wasser, während das Beschichtungsmittel des Vergleichsbeispiels V1 eine unzureichende Beständigkeit gegenüber Natronlauge zeigt. Außerdem zeigen die erfindungsgemäßen Beschichtungen der Beispiele B1 und B2 eine bessere Erichsentiefung als die Beschichtung des Vergleichsbeispiels V1. Die Kratzfestigkeit aller Beschichtungen ist gut.

## Patentansprüche

1. Wässriges Beschichtungsmittel enthaltend mindestens eine hydroxylgruppenhaltige Verbindung (A), mindestens eine Verbindung (B) mit freien und/oder blockierten Isocyanatgruppen sowie mit hydrolysierbaren Silangruppen und mindestens einen Katalysator (C) für die Vernetzung von Silangruppen,
**dadurch gekennzeichnet, dass** die Verbindung (B) 10 mol-% bis 80 mol-%, bezogen auf die Gesamtheit der Struktureinheiten (I) und (II), mindestens einer Struktureinheit der Formel (I)
-N(X-SiR"x(OR')3-x)n(X'-SiR"y(OR')3-y)m (I)
wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2, sowie
x, y = 0 bis 2,
und
mehr als 10 mol-% bis 90 mol-%, bezogen auf die Gesamtheit der Struktureinheiten (I) und (II), mindestens eine Struktureinheit der Formel (II)
-Z-(X-SiR"x(OR')3-x) (II),
wobei
Z = -NH-, -NR-, -O-, -S-, bevorzugt -NH- oder -NR- mit R = Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
x = 0 bis 2, und
X, R', R" die bei Formel (I) angegebene Bedeutung haben,
aufweist
und in der Verbindung (B) der Anteil der zu den Struktureinheiten (I) und (II) umgesetzen Isocyananatgruppen zwischen 10 und 60 mol-% liegt.

2. Beschichtungsmittel nach Anspruch 1, **dadurch gekennzeichnet,**
**dass** die Verbindung (B)
zwischen 20 und 80 mol-%, insbesondere zwischen 30 und 70 mol-%, besonders bevorzugt zwischen 40 und 60 mol-%, jeweils bezogen auf die Gesamtheit der Struktureinheiten (I) und (II), mindestens einer Struktureinheit der Formel (I)
und
zwischen 20 und 80 mol-%, insbesondere zwischen 30 und 70 mol-%, besonders bevorzugt zwischen 40 und 60 mol-%, jeweils bezogen auf die Gesamtheit der Struktureinheiten (I) und (II), mindestens einer Struktureinheit der Formel (II) aufweist.

3. Beschichtungsmittel nach Anspruch 1 oder 2, **dadurch gekennzeichnet, dass** die isocyanatgruppenhaltige Verbindung (B) hydrophile Gruppen, bevorzugt ausgewählt aus der Gruppe der Polyethergruppen und/oder der zur Anionenbildung befähigten Gruppen, insbesondere der Carboxylgruppen, Phosphorsäuregruppen, Phosphonsäuregruppen und/oder Sulfonsäuregruppen, aufweist.

4. Beschichtungsmittel nach einem der Ansprüche 1 bis 3, **dadurch gekennzeichnet, dass** die Verbindung (B) erhältlich ist, indem ein Teil der Isocyanatgruppen eines Polyisocyanates (PI) mit einer Mischung aus
mindestens einer Verbindung (Ia)
HN(X-SiR"x(OR')3-x)n(X'-SiR"y(OR')3-y)m (la)
und
mindestens einer Verbindung (IIa)
H-Z-(X-SiR"x(OR')3-x) (IIa)
umgesetzt worden ist.

5. Beschichtungsmittel nach einem der Ansprüche 1 bis 4, **dadurch gekennzeichnet, dass** in der Verbindung (B) der Anteil der zu den Struktureinheiten (I) und (II) umgesetzten Isocyanatgruppen zwischen 20 und 50 mol-%, bevorzugt bei mehr als 20 bis 40 mol-%, liegt.

6. Beschichtungsmittel nach einem der Ansprüche 1 bis 5, **dadurch gekennzeichnet, dass** das Polyisocyanat (PI) ausgewählt ist aus der Gruppe 1,6-Hexamethylendiisocyanat, Isophorondiisocyanat, und 4,4'-Methylendicyclohexyldiisocyanat, der Biuret-Dimeren der vorgenannten Polyisocyanate und/oder der Isocyanurat-Trimeren der vorgenannten Polyisocyanate.

7. Beschichtungsmittel nach einem der Ansprüche 1 bis 6, **dadurch gekennzeichnet, dass** der Katalysator (C) phosphorhaltig oder phosphor- und stickstoffhaltig ist.

8. Beschichtungsmittel nach einem der Ansprüche 1 bis 7, **dadurch gekennzeichnet, dass** die hydroxylgruppenhaltige Verbindung (A) wasserverdünnbar ist.

9. Beschichtungsmittel nach einem der Ansprüche 1 bis 8, **dadurch gekennzeichnet, dass** die hydroxylgruppenhaltige Verbindung (A) eine OH-Zahl von 30 bis 400 mgKOH/g, bevorzugt von 100 bis 300 mgKOH/g, und/oder die hydroxylgruppenhaltige Verbindung (A) eine Säurezahl von 30 bis 1 mgKOH/g, bevorzugt von 20 bis 5 mgKOH/g, aufweist.

10. Beschichtungsmittel nach einem der Ansprüche 1 bis 9, **dadurch gekennzeichnet, dass** die hydroxylgruppenhaltige Verbindung (A) ein Poly(meth)acrylatharz und/oder ein Polyesterharz und/oder ein Polyurethanharz, bevorzugt ein Poly(meth)acrylatharz, ist.

11. Beschichtungsmittel nach einem der Ansprüche 1 bis 10, **dadurch gekennzeichnet, dass** die hydroxylgruppenhaltige Verbindung (A) erhältlich ist, indem in einem organischen Lösemittel oder einem Lösemittelgemisch ein hydroxyl- und säuregruppenhaltiges Oligomer und/oder Polymer hergestellt wird, das so erhaltene Oligomer und/oder Polymer teilweise neutralisiert und in Wasser dispergiert wird.

12. Beschichtungsmittel nach einem der Ansprüche 1 bis 11, **dadurch gekennzeichnet, dass** das Beschichtungsmittel ein Zwei- oder Mehrkomponenten-Beschichtungsmittel ist, enthaltend
(I) eine Komponente (I) enthaltend die hydroxylgruppenhaltige Verbindung (A),
(II) eine Komponente (II) enthaltend die Verbindung (B) und den Katalysator (C),
und ggf.
(III) eine Komponente (III) enthaltend weitere Bestandteile des Beschichtungsmittels.

13. Mehrstufiges Beschichtungsverfahren, **dadurch gekennzeichnet, dass** auf ein gegebenenfalls vorbeschichtetes Substrat eine pigmentierte Basislackschicht und danach eine Schicht aus dem Beschichtungsmittel nach einem der Ansprüche 1 bis 12 aufgetragen wird.

14. Mehrstufiges Beschichtungsverfahren nach Anspruch 13,
**dadurch gekennzeichnet, dass** nach dem Auftrag der pigmentierten Basislackschicht der aufgebrachte Basislack zunächst bei Temperaturen von Raumtemperatur bis 80°C getrocknet wird und nach dem Auftrag des Beschichtungsmittels nach einem der Ansprüche 1 bis 12 bei Temperaturen von 30 bis 200°C während einer Zeit von 1 min bis zu 10 h gehärtet wird.

15. Verwendung der Beschichtungsmittel nach einem der Ansprüche 1 bis 12 als Klarlack für die Automobilserienlackierung, die Beschichtung von Automobil-Anbauteilen und für die Automobilreparaturlackierung.

16. Anwendung des Verfahrens nach Anspruch 13oder 14 für die Automobilserienlackierung, die Beschichtung von Automobil-Anbauteilen und für die Automobilreparaturlackierung.

## Claims

1. Aqueous coating composition comprising at least one hydroxyl-containing compound (A), at least one compound (B) having free and/or blocked isocyanate groups and also having hydrolyzable silane groups, and at least one catalyst (C) for the crosslinking of silane groups,
**characterized in that** the compound (B) has 10 mol% to 80 mol%, based on the entirety of the structural units (I) and (II), of at least one structural unit of the formula (I)
-N(X-SiR"x(OR')3-x)n(X'-SiR"y(OR')3-y)m (I)
where
R' = hydrogen, alkyl or cycloalkyl, it being possible for the carbon chain to be interrupted by nonadjacent oxygen, sulfur or NRa groups, where Ra = alkyl, cycloalkyl, aryl or aralkyl, preferably R' = ethyl and/or methyl,
X, X' = linear and/or branched alkylene or cycloalkylene radical having 1 to 20 carbon atoms, preferably X, X' = alkylene radical having 1 to 4 carbon atoms,
R" = alkyl, cycloalkyl, aryl or aralkyl, it being possible for the carbon chain to be interrupted by nonadjacent oxygen, sulfur or NRa groups, where Ra = alkyl, cycloalkyl, aryl or aralkyl, preferably R" = alkyl, more particularly having 1 to 6 C atoms
n = 0 to 2, m = 0 to 2, m+n = 2, and
x, y = 0 to 2,
and
more than 10 mol% to 90 mol%, based on the entirety of the structural units (I) and (II), of at least one structural unit of the formula (II)
-Z-(X-SiR"x(OR')3-x) (II),
where
Z = -NH-, -NR-, -O- or -S-, preferably -NH- or -NR-, where
R = alkyl, cycloalkyl, aryl or aralkyl, it being possible for the carbon chain to be interrupted by nonadjacent oxygen, sulfur or NRa groups, where Ra = alkyl, cycloalkyl, aryl or aralkyl,
x = 0 to 2, and
X, R' and R" have the definition indicated for formula (I),
and the fraction in the compound (B) of the isocyanate groups that have been reacted to form the structural units (I) and (II) is between 10 and 60 mol%.

2. Coating composition according to Claim 1, **characterized in that** the compound (B) has
between 20 and 80 mol%, more particularly between 30 and 70 mol%, more preferably between 40 and 60 mol%, based in each case on the entirety of the structural units (I) and (II), of at least one structural unit of the formula (I)
and
between 20 and 80 mol%, more particularly between 30 and 70 mol%, more preferably between 40 and 60 mol%, based in each case on the entirety of the structural units (I) and (II), of at least one structural unit of the formula (II).

3. Coating composition according to Claim 1 or 2, **characterized in that** the isocyanate-group-containing compound (B) has hydrophilic groups, preferably selected from the group consisting of polyether groups and/or groups capable of forming anions, more particularly of carboxyl groups, phosphoric acid groups, phosphonic acid groups and/or sulfonic acid groups.

4. Coating composition according to any of Claims 1 to 3, **characterized in that** the compound (B) is obtainable by some of the isocyanate groups of a polyisocyanate (PI) having been reacted with a mixture of
at least one compound (Ia)
HN(X-SiR"x(OR')3-x)n(X'-SiR"y(OR')3-y)m (Ia)
and
at least one compound (IIa)
H-Z-(X-SiR"x(OR')3-x) (IIa).

5. Coating composition according to any of Claims 1 to 4, **characterized in that** the fraction in the compound (B) of the isocyanate groups that have been reacted to form the structural units (I) and (II) is between 20 and 50 mol%, preferably more than 20 to 40 mol%.

6. Coating composition according to any of Claims 1 to 5, **characterized in that** the polyisocyanate (PI) is selected from the group consisting of 1,6-hexamethylene diisocyanate, isophorone diisocyanate, and 4,4'-methylenedicyclohexyl diisocyanate, the biuret dimers of the aforementioned polyisocyanates and/or the isocyanurate trimers of the aforementioned polyisocyanates.

7. Coating composition according to any of Claims 1 to 6, **characterized in that** the catalyst (C) is phosphorus-containing or phosphorus- and nitrogen-containing.

8. Coating composition according to any of Claims 1 to 7, **characterized in that** the hydroxyl-containing compound (A) is water-dilutable.

9. Coating composition according to any of Claims 1 to 8, **characterized in that** the hydroxyl-containing compound (A) has an OH number of 30 to 400 mgKOH/g, preferably of 100 to 300 mgKOH/g, and/or the hydroxyl-containing compound (A) has an acid number of 30 to 1 mgKOH/g, preferably of 20 to 5 mgKOH/g.

10. Coating composition according to any of Claims 1 to 9, **characterized in that** the hydroxyl-containing compound (A) is a poly(meth)acrylate resin and/or a polyester resin and/or a polyurethane resin, preferably a poly(meth)acrylate resin.

11. Coating composition according to any of Claims 1 to 10, **characterized in that** the hydroxyl-containing compound (A) is obtainable by preparing, in an organic solvent or in a solvent mixture, a hydroxyl-containing and acid-group-containing oligomer and/or polymer, subjecting the resulting oligomer and/or polymer to partial neutralization, and dispersing them/it in water.

12. Coating composition according to any of Claims 1 to 11, **characterized in that** the coating composition is a two-component or multicomponent coating composition comprising
(I) a component (I) comprising the hydroxyl-containing compound (A),
(II) a component (II) comprising the compound (B) and the catalyst (C),
and optionally
(III) a component (III) comprising further constituents of the coating composition.

13. Multistage coating method **characterized in that** it comprises applying, to an optionally precoated substrate, a pigmented basecoat film and thereafter a film of the coating composition according to any of Claims 1 to 12.

14. Multistage coating method according to Claim 13, **characterized in that** the application of the pigmented basecoat film is followed by drying of the applied basecoat initially at temperatures from room temperature to 80°C and, following the application of the coating composition according to any of Claims 1 to 12, by curing at temperatures from 30 to 200°C for a time of 1 minute up to 10 hours.

15. Use of the coating compositions according to any of Claims 1 to 12 as a clearcoat for automotive OEM finishing, for the coating of parts for installation in or on automobiles, or for automotive refinish.

16. Application of the method according to Claim 13 or 14 for automotive OEM finishing, for the coating of parts for installation in or on automobiles, or for automotive refinish.

## Revendications

1. Agent de revêtement aqueux contenant au moins un composé contenant des groupes hydroxyle (A), au moins un composé (B) contenant des groupes isocyanate libres et/ou bloqués, ainsi que des groupes silane hydrolysables, et au moins un catalyseur (C) pour la réticulation de groupes silane,
**caractérisé en ce que** le composé (B) comprend 10 % en moles à 80 % en moles, par rapport à la totalité des unités structurales (I) et (II), d'au moins une unité structurale de formule (I)
**-N(X-SiR"x(OR')3-x)n(X'-SiR"y(OR')3-y)m** **(I)**
dans laquelle
R' = hydrogène, alkyle ou cycloalkyle, la chaîne carbonée pouvant être interrompue par des groupes oxygène, soufre ou NRa non voisins, avec Ra = alkyle, cycloalkyle, aryle ou aralkyle, de préférence R' = éthyle et/ou méthyle,
X, X' = radical alkylène ou cycloalkylène linéaire et/ou ramifié de 1 à 20 atomes de carbone, de préférence X, X' = radical alkylène de 1 à 4 atomes de carbone,
R" = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle, de préférence R" = radical alkyle, notamment de 1 à 6 atomes C,
n = 0 à 2, m = 0 à 2, m + n = 2, et
x, y = 0 à 2,
et
plus de 10 % en moles à 90 % en moles, par rapport à la totalité des unités structurales (I) et (II), d'au moins une unité structurale de formule (II)
**-Z-(X-SiR"x(OR')3-x)** **(II),**
dans laquelle
Z = -NH-, -NR-, -O-, -S-, de préférence -NH- ou -NR-, avec R = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle,
x = 0 à 2, et
X, R', R" ont la signification indiquée pour la formule (I),
et, dans le composé (B), la proportion des groupes isocyanate transformés en les unités structurales (I) et (II) est comprise entre 10 et 60 % en moles.

2. Agent de revêtement selon la revendication 1, **caractérisé en ce que** le composé (B) comprend
entre 20 et 80 % en moles, notamment entre 30 et 70 % en moles, de manière particulièrement préférée entre 40 et 60 % en moles, à chaque fois par rapport à la totalité des unités structurales (I) et (II), d'au moins une unité structurale de formule (I)
et
entre 20 et 80 % en moles, notamment entre 30 et 70 % en moles, de manière particulièrement préférée entre 40 et 60 % en moles, à chaque fois par rapport à la totalité des unités structurales (I) et (II), d'au moins une unité structurale de formule (II).

3. Agent de revêtement selon la revendication 1 ou 2, **caractérisé en ce que** le composé contenant des groupes isocyanate (B) comprend des groupes hydrophiles, de préférence choisis dans le groupe constitué par les groupes polyéther et/ou les groupes aptes à la formation d'anions, notamment les groupes carboxyle, les groupes acide phosphorique, les groupes acide phosphonique et/ou les groupes acide sulfonique.

4. Agent de revêtement selon l'une quelconque des revendications 1 à 3, **caractérisé en ce que** le composé (B) peut être obtenu par mise en réaction d'une partie des groupes isocyanate d'un polyisocyanate (PI) avec un mélange de
au moins un composé (Ia)
**HN(X-SiR"x(OR')3-x)n(X'-SiR"y(OR')3-y)m** **(la)**
et
au moins un composé (IIa)
**H-Z-(X-SiR"x(OR')3-x)** **(IIa)**

5. Agent de revêtement selon l'une quelconque des revendications 1 à 4, **caractérisé en ce que**, dans le composé (B), la proportion des groupes isocyanate transformés en les unités structurales (I) et (II) est comprise entre 20 et 50 % en moles, de préférence de plus de 20 à 40 % en moles.

6. Agent de revêtement selon l'une quelconque des revendications 1 à 5, **caractérisé en ce que** le polyisocyanate (PI) est choisi dans le groupe constitué par le diisocyanate de 1,6-hexaméthylène, le diisocyanate d'isophorone et le diisocyanate de 4,4'-méthylène-dicyclohexyle, les dimères de biuret des polyisocyanates susmentionnés et/ou les trimères d'isocyanurate des polyisocyanates susmentionnés.

7. Agent de revêtement selon l'une quelconque des revendications 1 à 6, **caractérisé en ce que** le catalyseur (C) contient du phosphore ou contient du phosphore et de l'azote.

8. Agent de revêtement selon l'une quelconque des revendications 1 à 7, **caractérisé en ce que** le composé contenant des groupes hydroxyle (A) peut être dilué avec de l'eau.

9. Agent de revêtement selon l'une quelconque des revendications 1 à 8, **caractérisé en ce que** le composé contenant des groupes hydroxyle (A) présente un indice OH de 30 à 400 mg KOH/g, de préférence de 100 à 300 mg KOH/g, et/ou le composé contenant des groupes hydroxyle (A) présente un indice d'acidité de 30 à 1 mg KOH/g, de préférence de 20 à 5 mg KOH/g.

10. Agent de revêtement selon l'une quelconque des revendications 1 à 9, **caractérisé en ce que** le composé contenant des groupes hydroxyle (A) est une résine de poly(méth)acrylate et/ou une résine de polyester et/ou une résine de polyuréthane, de préférence une résine de poly(méth)acrylate.

11. Agent de revêtement selon l'une quelconque des revendications 1 à 10, **caractérisé en ce que** le composé contenant des groupes hydroxyle (A) peut être obtenu par fabrication d'un oligomère et/ou d'un polymère contenant des groupes hydroxyle et acide dans un solvant ou mélange de solvants organique, neutralisation partielle de l'oligomère et/ou du polymère ainsi obtenu, et dispersion dans de l'eau.

12. Agent de revêtement selon l'une quelconque des revendications 1 à 11, **caractérisé en ce que** l'agent de revêtement est un agent de revêtement à deux composants ou plus, contenant :
(I) un composant (I) contenant le composé contenant des groupes hydroxyle (A)
(II) un composant (II) contenant le composé (B) et le catalyseur (C),
et éventuellement
(III) un composant (III) contenant d'autres constituants de l'agent de revêtement.

13. Procédé de revêtement à plusieurs étapes, **caractérisé en ce qu'**une couche de vernis de base pigmentée est appliquée sur un substrat éventuellement pré-revêtu, puis une couche de l'agent de revêtement selon l'une quelconque des revendications 1 à 12.

14. Procédé de revêtement à plusieurs étapes selon la revendication 13, **caractérisé en ce qu'**après l'application de la couche de vernis de base pigmentée, le vernis de base appliqué est tout d'abord séché à des températures allant de la température ambiante à 80 °C et, après l'application de l'agent de revêtement selon l'une quelconque des revendications 1 à 12, durci à des températures de 30 à 200 °C pendant une durée de 1 minute à 10 heures.

15. Utilisation de l'agent de revêtement selon l'une quelconque des revendications 1 à 12 en tant que vernis transparent pour le vernissage en série d'automobiles, le revêtement de pièces automobiles et pour le vernissage de réparation d'automobiles.

16. Utilisation du procédé selon la revendication 13 ou 14 pour le vernissage en série d'automobiles, le revêtement de pièces automobiles et pour le vernissage de réparation d'automobiles.
